Europäisches Patentamt

European Patent Office

Office européen des brevets

(19)

(11) Publication number: **0 115 296**
**B1**

(12) **EUROPEAN PATENT SPECIFICATION**

(45) Date of publication of patent specification: **22.07.87**

(51) Int. Cl.⁴: **F 21 S 5/00**

(21) Application number: **84100505.1**

(22) Date of filing: **18.01.84**

(54) **Artificial light source device.**

(30) Priority: **20.01.83 JP 7605/83**

(43) Date of publication of application:
**08.08.84 Bulletin 84/32**

(45) Publication of the grant of the patent:
**22.07.87 Bulletin 87/30**

(84) Designated Contracting States:
**CH DE FR GB LI NL**

(56) References cited:
**DE-A-2 545 355**
**GB-A-1 548 997**
**US-A-3 248 554**
**US-A-3 681 592**
**US-A-4 234 910**

(73) Proprietor: **Mori, Kei**
**3-16-3-501, Kaminoge**
**Setagaya-ku Tokyo (JP)**

(72) Inventor: **Mori, Kei**
**3-16-3-501, Kaminoge**
**Setagaya-ku Tokyo (JP)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

**Description**

The invention relates to an artificial light source device comprising a light source lamp, a reflection mirror for reflecting the light of the lamp onto an optical conductor rod, and an optical conductor cable comprising a large number of optical fibers, the light receiving edge surface of the cable being arranged opposed to the light discharging edge surface and the light, discharged from that optical cable, being used as the light source.

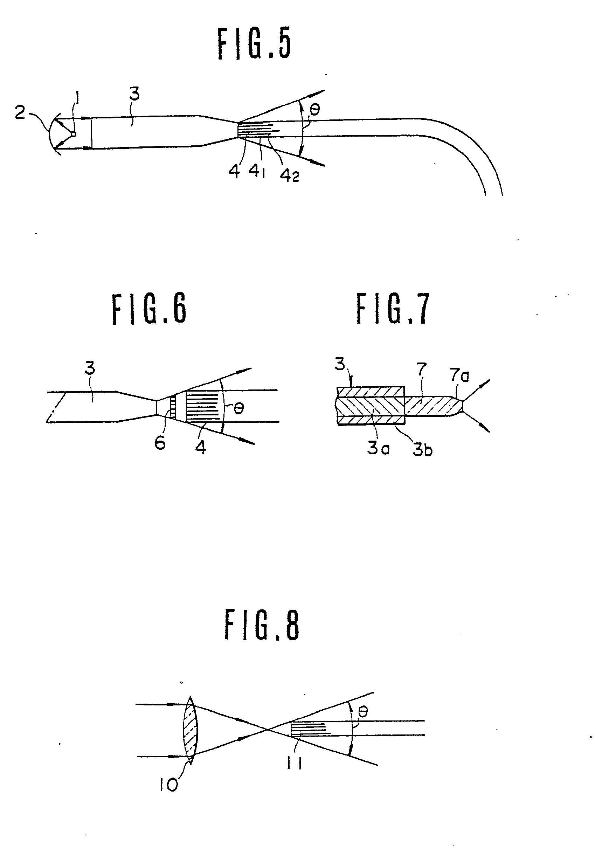

In general, it might be possible to illuminate by use of an electric lamp at any place. However, illumination in the explosive atmosphere or in water may be in danger of explosion or electric leakage. For this reason, the explosion-proof or water-proof electric appliance has to be chosen for use in such a place. However, those explosion-proof and water-proof appliances are voluminous, heavy and expensive. Further, it is impossible to realize the perfectly explosion-proof or water-proof appliance. The present applicant previously proposed the optical composition reaction device for nurturing chlorella, etc. and the plant cultivation device for promotedly cultivating the plant in the atmosphere containing carbon dioxide gas. Those devices require the light for performing optical composition reaction and their light source requires a large number of spotted light sources which do not discharge heat and are small in size. For the purpose of realizing such light sources, the present applicant previously proposed various methods; that is to say guiding the light obtained by focussing the solar ray with the lens, etc. into the optical conductor cable comprising a large number of the optical fibers. Such a device is shown in Figure 8 of the application, the Figure comprising a prior art embodiment with a solar ray light source. The light is guided through the optical conductor cable e.g. to an optical composition reaction device for the chlorella nurturing device the plant-promotedly-cultivating device, and so on, and using the light discharged from the optical fiber as the spotted light source. However, if the optical composition reaction device has to perform optical composition reaction even at night, artificial light shall be used instead of the solar ray as an original light source. On that occasion, it might be necessary that the light from the artificial light source is guided into the light conductor cable and further guided to the optical composition reaction device through the optical conductor cable, and both of the solar ray and the artificial light are alternatively used by switching them.

An artificial light source device according to the generic clause of claim 1 as known from US—PS—4234910. In this document an extremely lightweight high intensity illumination device is disclosed. In this device a rod is provided between a lamp and an optical cable to block out heat and to avoid damage of the fibers.

It is the object of the present invention to provide an artificial light source of the type, mentioned above, which can be used alternatively to a solar light illumination device and which illuminates the same area as with a solar ray light source. This task is solved with an artificial light source of the type above, in which said mirror converts the light into a parallel light beam, passing through said optical conductor rod and the optical conductor cable and that the light-discharging edge side of the optical conductor rod is formed in a head-cut conical shape to discharge the light with a predetermined light expanding angle. The artificial light source of this type has not only the advantage, that areas may be illuminated matching those areas which are illuminated by a solar light source device, so that switching between the devices for illuminating one and the same area during day and night is possible, but it has further the advantage, that it is a perfectly explosion or water-proof light source and it is a non-heat light source, which can be used in explosive atmosphere of the sea bottom or the like. Furthermore, the source cuts off the ultraviolet rays and can be used in optical composition reaction devices.

Further features and advantages of the invention will become apparent from the depending claims and the following detailed description taken with the accompanying drawings.

Brief description of the drawings
Fig. 1 is an outlined construction diagram for explaining an embodiment of the artificial light source device.
Fig. 2 and 3 are outlined construction diagrams showing other general examples.
Fig. 4 through 7 are construction diagrams showing other embodiments.
Fig. 8 is a diagram showing an embodiment of the solar ray light source.

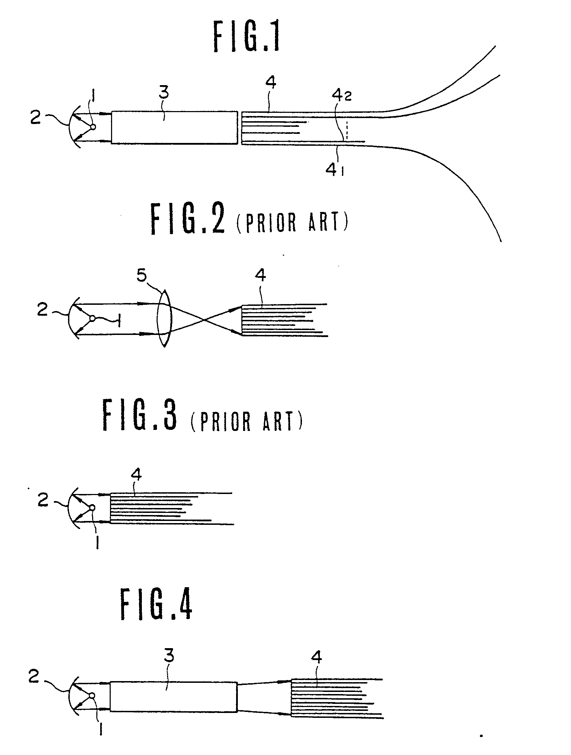

Description of the preferred embodiments
In Fig. 1, 1 is an artificial light source, 2 is a reflecting means, for instance, a parabola reflection mirror for converting the light from the artificial light source 1 into the parallel light and reflecting it, 3 is an optical conductor rod for receiving the parallel light from the reflecting mirror 2, and 4 is an optical conductor cable consisting of a plurality of optical fibers, $4_1$, $4_2$, $4_3$ ... As shown in Fig. 1, the light from the artificial light source 1 is converted into the parallel light by means of the reflecting mirror 2, and the converted parallel light is once guided into the optical conductor rod 3. And then, it is guided into the optical conductor cable 4 through the optical conductor rod 3. However, if the artificial light is guided through the optical conductor rod into the optical conductor cable the heat and the ultraviolet ray from the artificial light source may be cut off, and the light may be effectively guided into the optical conductor cable. In this connection, Figs. 2 and 3 are outlined construction diagrams showing general examples for guiding the light from the artificial light source into the optical conductor cable, respectively. In Fig. 2, the parallel light from the reflecting mirror 2 is focussed by means of the lens 5 and guided into the optical conductor cable 4. In such a manner, since the distance between the light-receiving edge of the optical conductor cable 4 and the artificial light source 1 can be made long, the light-receiving edge of the optical conductor cable (the clad layer of the optical fiber) might be prevented from being burnt down due to the heat from the artificial light source. Instead, the light guided into the optical conductor cable 4 is focussed by the lens 5 and the incident light to be transmitted toward the optical conductor cable 4 enters into it with an incidence angle. When the incidence angle is equal to or more than N.A. (Natural Aperture) of the optical conductor cable, the light cannot be guided into the optical conductor cable. And the position of the lens focus may become unstable due to color aberration. For this reason, it may be difficult to position the light-receiving edge of the optical cable. There exists a defect that the incidence efficiency against the optical conductor cable may become worse if the positioning of the light-receiving edge cannot be precisely done. According to an example as shown in Fig. 3, the parallel light reflected at the reflecting mirror 2 is directly guided into the optical conductor cable 4. On this occasion, the light-receiving edge of the light conductor cable 4 has to be kept close to the artificial light source 1 in order to effectively guide the reflected light into the optical conductor cable 4. Further, the clad layer of each optical fiber at the light-receiving edge side might be in danger of being burnt out. On the contrary, if the distance between the artificial light source 1 and the light-receiving edge of the optical conductor cable 4 is made long in order to avoid such burn-out, the optical loss between them may increase. And, on both occasions, there is a defect that the ultraviolet ray discharged from the artificial light source 1 cannot be removed. However, since the parallel light reflected by the reflecting mirror is once guided into the optical conductor rod and it is further guided into the optical conductor cable 4 as mentioned before, the distance between the artificial source and the light-receiving edge of the light conductor cable 4 can be made long so that the light-receiving edge may be protected from being burnt out. Furthermore, since the light reflected by the reflecting mirror is guided through the optical conductor rod into the optical conductor cable 4, the light-receiving edge of the optical conductor rod can be kept close to the artificial light source. Therefore, the parallel light reflected by the reflecting mirror can be effectively guided to the optical conductor cable 4 and further into the same. In addition, the ultraviolet ray contained in the artificial light source can be cut off by the optical conductor rod. If the preform rod, that is, the quartz rod, core and clad of which are made of quartz, is used as the optical conductor rod 3, there exists very few light leakage at the supporting portion and the light-receiving part is not in danger of being burnt out.

Figs. 4 through 7 are construction diagrams showing other embodiments. In those figures, same reference numerals as those of Fig. 1 are affixed to the parts performing same action as that of Fig. 1. In the embodiment shown in Fig. 4, the distance between the light-discharging edge of the optical conductor rod 3 and the light-receiving edge of the optical conductor 4 is made long to some extent. In such a manner, the heat transmitted through the optical conductor rod 3 can be prevented from being transmitted to the optical conductor cable 4. Further, the measuring instrument for measuring the light intensity, the prism for by-passing the light, and the filter for cutting off the ultraviolet ray, can be interposed between them. In such a manner, various additional functions or some improvements can be added between them. In the embodiment shown in Fig. 5, the light-discharging edge side of the optical conductor rod 3 is formed in a head-cut conical shape. According to the embodiment, when a part of the parallel light transmitted through the optical conductor rod 3 reflected at the head-cut conical-shaped portion, the radiation angle θ, that is, N. A. can be made great. In the embodiment shown in Fig. 6, a filter 6 is interposed between the light-discharging edge surface of the optical conductor rod 3 and the light-receiving edge surface of the optical conductor cable 4, so that the ultraviolet ray from the artificial light source 1 can be effectively cut off and the light from the same can be effectively guided into the optical conductor cable 4. In the embodiment shown in Fig. 7, the optical conductor rod 3 is a first optical conductor rod part, the second optical conductor rod part 7 is connected to the light-discharging edge side of the first optical conductor rod part 3, and the light-discharging edge side of the second part 7 is formed in a head-cut conical shape 7a. In such a manner, the light transmitted through the first optical conductor rod 3 can be effectively diffused by means of the second optical conductor rod 7. In Fig. 7, 3a is a core portion, 3b is a clad portion, and both of them are made of quartz. (But the refrective index of the core portion 3a is greater than that of the clad portion 3b).

Fig. 8 shows a prior art embodiment with a solar ray light source. In Fig. 8, the solar ray is focussed by means of the lens 10 and guided into the optical conductor cable or fiber 11. Further, it is transmitted through the optical conductor cable or fiber 11 to the optional desired place and used for the purpose of illumination or other usages. On that occasion, the focussing angle θ of the lens 10 approximately coincides with N.A. of the optical conductor cable. In the embodiments shown in Figs. 5 and 6, the head-cut conical portion at the light-discharging side of the optical conductor rod 3 is so formed that the light-expanding angle of the light discharged from the head-cut conical portion coincides with the light-focussing angle shown in Fig. 8. In such a manner, it follows that the light-expanding angle of the light discharged from the optical fiber shown in Figs. 5 and 6 turns out to be approximately equal to the light-expanding angle of the light discharged from the optical conductor cable or the optical fiber shown in Fig. 8. Supposing that the lights discharged from those optical conductor cables 4 or optical fibers are united or switched for their usage, all of the light-expanding angles of the lights discharged from all of the optical conductor cables 4 or the optical fibers may be equal to each other. In particular, in case that both of the light from the artificial light source and the light from the solar ray light source are alternatively used by switching them as mentioned before, the illumination area does not change at all when they are switched alternatively, and it may be possible to switch them keeping the matching condition with the object to be illuminated.

**Claims**

1. An artificial light source comprising a light source lamp (1), a reflection mirror (2) for reflecting the light of the lamp (1) onto an optical conductor rod (3) and an optical cable (4) comprising a large number of optical fibers, the light-receiving edge surface of the cable (4) being arranged opposed to the light-discharging edge surface and the light discharged from said optical cable (4) being used as the light source, characterized in that said mirror (2) converts the light into a parallel light beam, passing through said optical conductor rod (3) and the optical conductor cable (4) and that the light-discharging edge side of the optical conductor rod (3) is formed in a head-cut conical shape discharging the light with a predetermined light expanding angle ($\theta$).

2. An artificial light source device as defined in claim 1, characterized in that a filter (6) is interposed between the light-discharging edge surface of the optical conductor rod (3) and the light-receiving edge surface of the optical conductor cable (4).

3. An artificial light source as defined in claims 1 or 2, characterized in that said optical conductor rod (3) is made of quartz.

4. An artificial light source device as defined in either of claims 1 to 3 characterized in that the optical conductor rod is formed by two connected rod parts (3, 7) the one (7) of which forming the head-cut conical shape (7a).

**Patentansprüche**

1. Kunstlichtquelle mit einer Lichtquellenlampe (1) mit einem Reflektionsspiegel (2), der das Licht der Lampe auf einen optischen Leiterstab (3) und ein optisches Kabel (4), das eine große Anzahl optischer Fasern umfaßt, reflektiert, wobei die Licht aufnehmende Fläche des Kabels (4) der der Licht abgebenden Fläche gegenüberliegenden Fläche angeordnet ist und wobei das aus dem optischen Kabel (4) austretende Licht als Lichtquelle verwendet wird, dadurch gekennzeichnet, daß der Spiegel (2) das Licht in einen parallelen Lichtstrahl umwandelt, der durch den optischen Leiterstab (3) und das optische Leiterkabel (4) hindurchtritt und daß die Licht abgebenden Seitenkanten des optischen Leiterstabs (3) am Kopf konisch zulaufend ausgebildet ist, wobei das Licht mit einem vorbestimmten Divergenzwinkel ($\theta$) abgegeben wird.

2. Kunstlichtquelle nach Anspruch 1, dadurch gekennzeichnet, daß zwischen der Licht abgebenden Fläche des optischen Leiterstabs (3) und der Licht aufnehmenden Fläche des optischen Leiterkabels (4) ein filter (6) angeordnet ist.

3. Kunstlichtquelle nach Anspruch 1 oder 2, dadurch gekennzeichnet, daß der optische Leiterstab (3) aus Quarz hergestellt ist.

4. Kunstlichtquelle nach den Ansprüchen 1 bis 3, dadurch gekennzeichnet, daß der optische Leiterstab aus zwei miteinander verbundenen Teilen (3, 7) gebildet ist, wobei der eine Teil (7) diese am Kopf konisch zugeschnittene Form (7a) aufweist.

**Revendications**

1. Source lumineuse à lumière artificielle, comprenant une lampe (1) formant source de lumière, un miroir réfléchissant (2) pour renvoyer la lumière de la lampe (1) sur une tige guide optique (3), ainsi qu'un câble optique (4) contenant un grand nombre de fibres optiques, la face extrême réceptrice de lumière du câble (4) étant disposée en regard de la face extrême d'émission de la lumière de la tige et la lumière émise par le câble optique (4) étant utilisée en tant que source de lumière, caractérisée en ce que le miroir (2) convertit la lumière en un faisceau lumineux parallèle, lequel passe à travers la tige guide optique (3) et le câble guide optique (4), et en ce que la face extrême émettrice de lumière de la tige guide optique (3) constitue la petite base d'une extrémité de tige de forme tronconique d'où la lumière est émise sous un angle de divergence ($\theta$) prédéterminé.

2. Source selon la revendication 1, caractérisée en ce qu'un filtre (6) est disposé entre la face extrême émettrice de lumière de la tige guide optique (3) et la face extrême d'entrée de la lumière du câble guide optique (4).

3. Source selon la revendication 1 ou 2, caractérisée en ce que la tige guide optique (3) est une tige de quartz.

4. Source selon l'une quelconque des revendications 1 à 3, caractérisée en ce que la tige guide optique est constituée de deux parties (3, 7) reliées entre elles et dont l'une (7) possède ladite extrémité tronconique (7a).

0 115 296

# FIG.1

# FIG.2 (PRIOR ART)

# FIG.3 (PRIOR ART)

# FIG.4

1

# FIG.5

# FIG.6

# FIG.7

# FIG.8

2